(19) Europäisches Patentamt
European Patent Office
Office européen des brevets

(11) Publication number: **0 119 416 A1**

# (12) EUROPEAN PATENT APPLICATION

(21) Application number: **84100999.6**

(22) Date of filing: **01.02.84**

(51) Int. Cl.³: **C 08 L 71/04**

(30) Priority: **18.02.83 US 467972**

(43) Date of publication of application: **26.09.84**
**Bulletin 84/39**

(84) Designated Contracting States: **DE FR GB NL**

(71) Applicant: **GENERAL ELECTRIC COMPANY, 1 River Road, Schenectady New York 12305 (US)**

(72) Inventor: **Shu, Peter Hua-Cheng, 2922 Old State Road, Schenectady New York 12303 (US)**
Inventor: **Pecak, William Eugene, 29 Harmony Street, Cohoes New York 12047 (US)**
Inventor: **Mack, William Henry, 11 Quaker Drive, Schenectady New York 12309 (US)**
Inventor: **Huebner, James Alfred, 59 Beacon Road, Glenmont New York 12077 (US)**

(74) Representative: **Catherine, Alain, GETSCO 42, avenue Montaigne, F-75008 Paris (FR)**

## (54) Thermoplastic molding compostions having improved dust suppression.

(57) Nuisance dusting and non-uniform blend feeding can be avoided in the manufacture of dry, powdery thermoplastic materials by inclusion of an additive comprising a wetting agent such as mineral oil or a particulate rubber material or both.

EP 0 119 416 A1

8CN-8087

# THERMOPLASTIC MOLDING COMPOSITIONS HAVING IMPROVED DUST SUPPRESSION

Patent Application of

Peter H. Shu
William Pecak
William H. Mack
James A. Huebner

## Field of Invention:

The present invention is related to thermoplastic molding compositions and particularly modified polyphenylene ether compositions which exhibit improved dust suppression characteristics and improved blend feed behavior through the inclusion of an effective amount of additive such as mineral oil or rubber.

## Background of the Invention:

Dust is a by product of many industrial processes and ordinarily consists of finely divided solid particles. Various forms of dust are known to pose fire hazards and are sometimes harmful to people if inhaled. Dust conditions are minimized wherever possible by any of several means including baghouses, dust collectors and electrostatic precipitators. Yet despite such efforts to minimize dust exposure, certain manufacturing operations may nevertheless experience additional nuisance dust generation.

In particular, in the manufacture of thermoplastic compositions such as molding resins nuisance dust can collect and build in the vicinity of an extruder feedthroat and similar locations if other dust containment systems are not adequate. A portion of airborne dust may eventually be exhausted outside the manufacturing facility through building ventilation or even normal air flow. Such exhaust may additionally raise environmental concerns if not sufficiently abated.

Furthermore, in the manufacture of thermoplastic resins, inadequate dust control may cause surge hopper fires due to dusting. Additionally non-uniform blend feeding, a problem known as "woofing", is experienced in the manufacture of fine powder materials such as polyphenylene ether resins.

The above described problems are particulary acute in the manufacture of polyphenylene ether materials which are known to be unusually fine mesh powders.

It has now been discovered that the level of dust in the manufacturing process for thermoplastic resins can be effectively reduced by the inclusion of the dust suppressing/feed improving additive of the present invention. In particular it has been discovered that the inclusion of effective amounts of a particulate rubber and/or wetting agent additive to a thermoplastic resin blend can significantly reduce both the fire hazard and non-uniform blend feeding. Specific benefits of the present invention include reduced blend woofing and dust generation and decreased material loss, thereby also representing a substantial monetary savings.

Heretofore it has not been unknown to add mineral oil or rubbery additives to thermoplastic resins such as modified polyphenylene ether compositions, however, such additives have been utilized to obtain various beneficial properties (such as improved impact strength) in the resin composition. For example, in U.S. 4,102,850 (hereby incorporated by reference) Cooper et al. discovered that the addition of a small amount of mineral oil to a mixture of EPDM rubber and an alkenyl aromatic resin during polymerization of the resin greatly increases the low temperature impact strength of polyphenylene ether resin and EPDM-modified alkenyl aromatic resin compositions without impairment of other properties. However, the additive of the present invention is utilized in order to reduce the dusting characteristics of the resin as well as provide uniform blend feeding as opposed to the impact modification sought by Copper et al.

It is therefore an object of the present invention to provide thermoplastic resin compositions having improved dust suppression characteristics while substantially maintaining the otherwise advantageous physical properties of such compositions.

It is a further object to provide a process for reducing the generation of nuisance dust in the manufacture of thermoplastic resin compositions and molding compounds.

It is a further object to improve uniform feed behavior in a manufacturing process for thermoplastic resins and in particular for powdery thermoplastic resins such as polyphenylene.

These and other objects are accomplished by means taught by the present specification and claims.

Description of the Invention

In the manufacturing process for powdery, dry thermoplastic resin materials, excess dusting and nuisance dust generation can be avoided while at the same time improvements in blend feeding can be obtained by combining the additive to be described below with the thermoplastic resin material. It is believed that the process of the present invention can be of benefit in any process requiring the blending of dry, powdery, solid materials such as certain thermoplastic resins, however, it is to be noted that the present invention is particularly useful in the manufacture of polyphenylene ether reisns and copolymers thereof.

In one embodiment of the present invention, the thermoplastic resin is combined with an amount of additive effective for reducing dust generation and improving blend feeding characteristics.

The additive will ordinarily be comprised of either of two constitutents: a wetting agent or a particulate rubber, or blends of these.

Among the effective wetting agents there may be included: mineral oil, low molecular weight liquid polyglycols (such as polyethylene glycol or polypropylene glycol, etc.), low molecular weight liquid rubbers, low molecular weight silicone fluids, as well as others. Of these, mineral oil is preferred.

Among the effective particulate rubbers may be included: Phillip's Solprene 411 (a radial block copolymer of styrene and butadiene), Shell Kraton rubbers, Firestone Stereon rubbers as well as other rubbers such as particulate styrene butadiene rubber, particulate urethane rubber, particulate acrylic rubber, and particulate silicone rubber, as well as others.

Of these, Solprene 411 is preferred and it is especially preferable to utilize the Solprene 411 in combination with mineral oil.

Various effective amounts of the additives of the present invention can be utilized but ordinarily the additive will comprise, approximately, 0.1 to 10 parts by weight per 100 parts of the thermoplastic resin.

Dry reinforced and flame retardant versions of these resin compositions can also be provided utilizing the process of the present invention.

The polyphenylene ether resins, component (a), useful in accordance with the present process are, as previously indicated, individually well known.

The preferred polyphenylene ethers are homo- or copolymers of the formula:

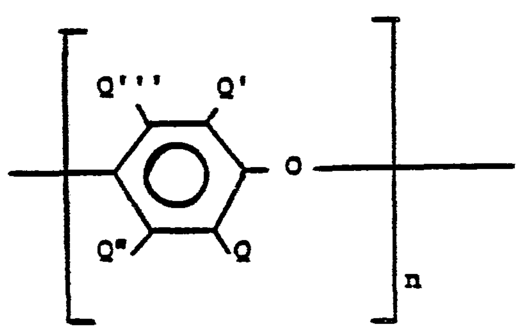

wherein Q, Q', Q'' and Q''', are independently selected from the group consisting of hydrogen, halogen, hydrocarbon radicals, halophydrocarbon radicals, hydrocarbonoxy radicals and halohydrocarbonoxy radicals; and n represents the total number of monomer units and is an integer of at least about 20, and typically at least 50.

Especially preferred is poly(2,6-dimethyl-1,4-phenylene) ether, although other powdery copolymers of polyphenylene ethers may benefit for the process of the present invention.

The polyphenylene ethers may be prepared by following the procedures described in U.S. Patents 3,306,874 and 3,306,875 of Hay and U.S. Patents 3,257,357 and 3,257,358 of Stamatoff. These patents are hereby incorporated by reference.

The polyphenylene ether resin is employed in admixture or as a copolymer with (b) an alkenyl aromatic resin or a rubber modified alkenyl aromatic resin. A typical alkenyl aromatic resin useful in the present invention is rubber modified, high impact polystyrene resin.

The terminology "rubber modified, high impact polystyrene", or "HIPS", is employed throughout this disclosure in its conventional specific sense to designate crystal polystyrene which has been rubber toughened to improve the impact resistance by adding an amount of a rubbery material to the styrene either before or after its polymerization. The resultant rubber modified material is essentially a graft interpolymer of polystyrene and rubber which, in the usual case, retains the original glossy or "crystal" appearance of the polystyrene.

The rubber modified, high impact polystyrenes have been commercially available for some time. Methods of their preparation are well known to those skilled in the art and thoroughly described in the literature.

As is known, various rubbery materials can be used to impact modify the polystyrene. Usually, these will be diene or diene containing rubbers, and most commonly, polybutadiene or a copolymer of butadiene with one or more other monomers.

Components (a) and (b) are utilizable in virtually all proportions, as is typical of these two materials. Preferably, however, the compositions will contain them in a weight ratio of (a):(b) within the range between 20:1 and 1:4.

The additive of the present process may include a wetting agent which will typically be a relatively low molecular weight liquid such as mineral oil, liquid rubber (such as Arco Poly BD$^{(R)}$ liquid resin), silicone fluid or liquid polyglycols. Of these, mineral oil is preferred.

The mineral oils useful as the dust supressing additive of the present invention are various light hydrocarbon oils, especially those distilled from petroleum.

White mineral oils are a complex mixture of saturated paraffinic and napthenic hydrocarbons and are usually free of aromatic compounds, sulfur-containing compounds, acids and other impurities. White mineral oils are available in a wide range of viscosities. Saybolt viscosities may typically range from about 50 to about 350 at 100°F. Examples of suitable oils are PROTOL, GLORIA, and KAYDOL oils manufactured by Witco Chemical Company. A description of mineral oils can be found in U.S. Patent 2,619,478 which is incorporated herein by reference.

The alternative additive of the present invention which may be used in conjunction with the above described mineral oil or which may be utilized separately is a particulate elastomer or rubber additive. In order for the additive to function as an effective dust suppressing agent or to improve the blend feed characteristics of the polyphenylene ether resin compositions, it is necessary that the rubber additives be in particulate form. Especially preferred is Phillip's Solprene 411 elastomer which is a radial ABA block copolymer comprised of, approximately, 70% butadiene and 30% styrene. Other suitable particulate rubbers have been mentioned above.

The compositions provided by the process of the invention can also include other ingredients, such as flame-retardants, extenders, processing aids, pigments, stabilizers, fillers such

as mineral fillers and glass flakes and fibers, and the like. In particular, reinforcing fillers, in amounts sufficient to impart reinforcement, can be used, e.g., aluminum, iron or nickel, and the like, and non-metals, e.g., carbon filaments, silicates, such as acicular calcium silicate, asbestos, titanium dioxide, potassium titanate and titanate whiskers, glass flakes and fibers, and the like. It is to be understood that, unless the filler adds to the strength and stiffness of the composition, it is only a filler and not a reinforcing filler as contemplated herein. In particular, the reinforcing fillers increase the flexural strength, the flexural modulus, the tensile strength and the heat distortion temperature.

Although it is only necessary to have at least a reinforcing amount of the reinforcement present, in general, the combination of components (a) and (b) will comprise from about 10 to about 90 parts by weight and the filler will comprise from about 10 to about 90 parts by weight of the total composition.

It is a feature of this invention also to provide flame-retardant thermoplastic compositions, as by modifying the composition to include a flame-retardant additive in a minor proportion but in an amount at least sufficient to render the composition non-burning or self-extinguishing.

Of course it is to be understood that when liquid flame retardants or fillers or other additives are utilized, nuisance dusting and non-uniform blend feeding problems are often avoided. However, should it be desirable to add flame retardants or fillers or other additives which are themselves typically dry or powdery, the dusting and blend feeding problems will persist and the process of the present invention can be used to great advantage.

A flame-retardant composition as above defined can also be provided which includes a halogenated organic compound, a halogenated organic compound in admixture with an antimony

compound, elemental phosphorus, a phosphorus compound, compounds containing phosphorus-nitrogen bonds, or a mixture of two or more of the foregoing.

The flame-retardant additives useful in this invention comprise a family of chemical compounds well known to those skilled in the art. Generally speaking, the more important of these compounds contain chemical elements employed for their ability to impart flame resistance, e.g., bromine, chlorine, antimony, phosphorus, and nitrogen. It is preferred that the flame-retardant additive comprise a halogenated organic compound (brominated or chlorinated); a halogen-containing organic compound in admixture with antimony oxide; elemental phosphorus or a phosphorus compound; a halogen-containing compound in admixture with a phosphorus compound or compounds containing phosphorus-nitrogen bonds; or a mixture of two or more of the foregoing.

The amount of flame-retardant additive used is not critical to the invention, so long as it is present in a minor proportion based on the polyphenylene ether-modified alkenyl aromatic polymer composition - major proportions will detract from physical properties - but at least sufficient to render the composition non-burning or self-extinguishing. Those skilled in the art are well aware that the amount will vary with the nature of the polymers in the composition and with the efficiency of the additives.

The compositions described above may be formed by conventional techniques and as such by blending the ingredients, ordinarily followed by extrusion. Inclusion of the additives of the present invention can effectively suppress the dusting levels of the otherwise dry, very fine powder of the composition blend, as well as improve the powder feed characteristics of the polyphenylene ether resin powder. Early inclusion of the additives at the blending stage can provide the benefits of the present invention immediately and at all

subsequent stages of the manufacturing process where dusting and non-uniform blend feeding are a problem.

## Description of the Preferred Embodiments

The following examples further illustrate the present invention and are not to be construed as limiting the invention in any manner. Unless otherwise indicated, all parts are by weight.

### Examples 1 and 2

Compositions according to the process of the present invention, noted below, were prepared by blending the ingredients noted below and in the tables, extruding the blend at approx. 570°F. in a 83 mm Werner-Pfleiderer twin screw extruder, and molding the extrudate at a melt temperature of 570°F, mold temperature of 190°F, 750 psi injection pressure and 12/40 sec cycle. A control as noted below was also prepared and molded. The results are shown in Tables I and II in which the abbreviations designate the following:

PPO(R) - poly(2,6-dimethyl-1,4-phenylene ether) resin, General Electric Company.

HIPS - Foster Grant's FG834 high impact rubber modified polystyrene, containing about 8% to 10% polybutadiene rubber.

MO - Mineral Oil (Kaydol from Witco Chemical Co.)

Rubber - Phillip's Solprene 411 particulate elastomer radial ABA block copolymer (approximately 70% butadiene and 30% styrene).

Table I

| Formulation | Examples[a] A[b] | 1 | 2 |
|---|---|---|---|
| PPO | 45 | 45 | 50 |
| HIPS | 55 | 55 | 50 |
| Rubber | 0 | 2 | 2 |
| MO | 0 | 0 | 1.5 |
| Dusting During Extrusion of Blending | Severe | Very Slight | Very Slight |

(a) Each of these formulations also contained 1.5 parts polyethylene, and 1.3 parts color and thermal stabilizers.

(b) Example A is a comparison.

Table II

| Example | ASTM HDT | Melt Viscosity (1500 $sec^{-1}$) | Izod (1/8 in.) | Gardner (in-lbs) | Flow Channel (in.) |
|---|---|---|---|---|---|
| A | 232°F | 2150 poise | 4.1 | 175 | 16.75 |
| 1 | 233 | 2150 | 5.7 | 205 | 17.5 |
| 2 | 234 | 2050 | 5.2 | 180 | 17.5 |

| | ASTM TENSILE | | | ASTM FLEX | |
|---|---|---|---|---|---|
| Example | %E | TYS | YUS | Modulus | Yield Strength |
| A | 39 | 7700 | 7300 | 347,000 | 10,900 |
| 1 | 52 | 7000 | 6700 | 321,000 | 9,200 |
| 2 | 56 | 7500 | 7100 | 327,000 | 10,100 |

Thus it is apparent that the process of the present invention can provide compositions having properties comparable to previously available compositions while significantly reducing the hazards associated with dusting during extrusion of fine powders. Determination as to whether the level of dusting during blending or extrusion is slight or severe is a relative determination made on the basis of comparison with materials exhibiting significant dusting problems.

## Examples 3 and 4

Additional compositions were prepared in the manner described above. Tables III and IV provide the formulations and properties for materials improved by the present process. Once again, comparable products are obtained while reducing the dust hazard. The abbreviations are as described above.

### Table III

| Formulation | Examples (a) | | |
|---|---|---|---|
| | B(b) | 3 | 4 |
| PPO | 35 | 35 | 40 |
| HIPS | 65 | 65 | 60 |
| Rubber | 0 | 2 | 2 |
| MO | 0 | 0 | 1.5 |
| Dusting During Extrusion or Blending | Severe | Very Slight | Very Slight |

(a) each of these formulations also contained 1.5 parts polyethylene and 0.5 part color stabilizer.

Table IV

| EXAMPLE | ASTM HDT | MELT VISCOSITY ($1500\ sec^{-1}$) | IZOD (1/8 in) | GARDNER (in-lbs) | FLOW CHANNEL (in) |
|---|---|---|---|---|---|
| B | 229°F | 1500 poise | 5.0 | 145 | 17 |
| 3 | 223 | 1400 | 6.3 | 190 | 17.75 |
| 4 | 224 | 1550 | 5.9 | 170 | 15 |

| | ASTM TENSILE | | | ASTM FLEX | |
|---|---|---|---|---|---|
| Example | %E | TYS | YUS | Modulus | Yield Strength |
| B | 53 | 7000 | 6500 | 326,000 | 9,100 |
| 3 | 73 | 6400 | 6000 | 301,000 | 8,100 |
| 4 | 62 | 6900 | 6600 | 310,000 | 9,000 |

We Claim:

1. A process for providing uniform blend feeding and reducing nuisance dust generation in the manufacture of polyphenylene ether modified resin compositions comprising the steps of:

combining (a) a polyphenylene ether resin or copolymers thereof; and

(b) an alkenyl aromatic resin; blending with (a) and (b) an additive (c) selected from the group consisting of:

(i) a wetting agent;

(ii) a particulate rubber; or

(iii) blends of (i) and (ii); wherein additive (c) is present in an amount effective to reduce nuisance dust generation and provide uniform blend feeding in said manufacturing process.

2. A process as in Claim 1 wherein said polyphenylene ether resin is poly(2,6-dimethyl-1,4-phenylene) ether.

3. A process as in Claim 1 wherein said alkenyl aromatic resin is rubber modified high impact polystyrene resin.

4. A process as in Claim 1 wherein the weight ratio of a:b is, approximately, 20:1 to 1:4.

5. A process as in Claim 1 wherein additive (c) is present in an amount of approximately, 0.1 to 10 parts by weight per 100 parts of (a) and (b).

6. A process as in Claim 1 wherein said wetting agent is selected from the group consisting of mineral oil, low molecular weight liquid polyglycols, low molecular weight liquid rubbers, low molecular weight liquid silicone fluids, and blends of these.

7. A process as in Claim 1 wherein said particulate rubber is selected from the group consisting of particulate radial block copolymers of styrene and butadiene, particulate styrene butadiene rubbers, particulate urethane rubbers, particulate acrylic rubbers, and particulate silicone rubbers and blends of these.

8. A process as in Claim 1 wherein said additive is a combination of mineral oil and particulate radial block copolymer of styrene and butadiene.

9. In a process for producing dry, powdery thermoplastic resin materials characterized by unacceptable levels of dusting and non-uniform blend feeding, the improvement comprising adding an additive effective for reducing said level of dusting and providing more uniform blend feeding, wherein said additive is selected from the group consisting of:
   - (i) a wetting agent,
   - (ii) a particulate rubber, or
   - (iii) blends of (i) and (ii).

10. A process as in Claim 9 wherein said wetting agent is selected from the group consisting of mineral oil, low molecular weight liquid polyglycols, low molecular weight liquid rubbers, low molecular weight liquid silicone fluids, and blends of these.

11. A process as in Claim 9 wherein said particulate rubber is selected from the group consisting of particulate radial block copolymers of styrene and butadiene, particulate styrene butadiene rubbers, particulate urethane rubbers, particulate acrylic rubbers, and particulate silicone rubbers and blends of these.

12. A process as in Claim 9 wherein the thermoplastic resin is a polyphenylene ether resin and copolymers thereof.

13. A process as in Claim 9 wherein the polyphenylene ether resin is modified with alkenyl aromatic resin.

14. A process as in Claim 9 wherein the additive is a combination of mineral oil and particulate radial block copolymer of styrene and butadiene.

15. A process as in Claim 9 wherein the additive is present in an amount of, approximately 0.1 to 10 parts by weight per 100 parts of said thermoplastic resin.

16. A product produced by the process of Claim 1.

17. A product produced by the process of Claim 9.

0119416

European Patent Office

# EUROPEAN SEARCH REPORT

Application number

EP 84 10 0999

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-4 128 602 (A. KATCHMAN et al.)<br>* Column 4, line 16 - column 6, line 16; claims 1-3 *<br>--- | 1-5,7-9,11-17 | C 08 L 71/04 |
| A | WO-A-8 102 020 (GENERAL ELECTRIC)<br>* Claims 1, 2, 6 *<br>--- | 1-3,6,10 | |
| A | US-A-4 365 038 (G.D. COOPER et al.)<br>* Claim 1 *<br>--- | 1-3,6,10 | |
| D,A | US-A-4 102 850 (G.D. COOPER et al.)<br>* Claim 1 *<br>--- | 1-3,6,10 | **TECHNICAL FIELDS SEARCHED (Int. Cl. 3)** |
| A | WO-A-8 000 568 (GENERAL ELECTRIC)<br>* Claim 2 *<br>----- | 1-3,6,10 | C 08 J 3/22<br>C 08 L 71/04 |

The present search report has been drawn up for all claims

| Place of search | Date of completion of the search | Examiner |
|---|---|---|
| BERLIN | 12-05-1984 | IDEZ C.G. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82